# EUROPEAN PATENT SPECIFICATION

(11) **EP 0 707 999 B1**
(45) Date of publication and mention of the grant of the patent: **24.03.1999**
(21) Application number: 95307128.9
(22) Date of filing: 09.10.1995
(51) Int. Cl.: B60N 2/36

(54) **A motor vehicle folding seat assembly and securing means therefor**
Faltsitzeinrichtung für Kraftfahrzeuge und ihre Befestigungsmittel
Ensemble de siège pliable pour véhicules automobiles et ses moyens de fixation

(30) Priority: 21.10.1994 GB 9421255
(43) Date of publication of application: 24.04.1996
(73) Proprietor: ROVER GROUP LIMITED, Warwick, Warwickshire CV34 6RG (GB)
(72) Inventor: Sharman, Paul, Coventry, West Midlands (GB); Jassam, Faiek Abdelhadi, Coventry, West Midlands (GB)
(74) Representative: Burrage, David John

(56) References cited:
- EP-A- 0 336 819
- EP-A- 0 474 368
- DE-A- 3 211 363
- FR-A- 2 711 952

## Description

This invention relates to a motor vehicle and in particular to a folding rear seat assembly for a motor vehicle.

It is known to provide a folding rear seat for a motor vehicle having one or more backrest portions that can be folded forward onto a seat portion of the seat assembly such seat assemblies often being referred to as split rear seats.

A previous seat assembly is described in EP-A-0 474 368 (corresponding to the preambles of claims 1 and 5) (Rover) in which upstanding plates from a vehicle floor are used to locate the seat. However, location is through capture of opposed pivot pins so that installation within the vehicle may be difficult. Essentially, previously a compromise was drawn between simplicity of installation using adjustable, mechanically disposable assemblies or more static, but cheaper, fixed plates and interference engagement therewith.

It is an object of this invention to provide an improved seat assembly for a motor vehicle and in particular to provide an improved apparatus for attaching a backrest portion of the seat assembly to part of the structure of the motor vehicle.

According to a first aspect of the invention, there is provided a motor vehicle rear seat securing means for releasably securing a rear seat backrest portion to the structure of a motor vehicle, the securing means including a pivot means for attachment near to the lower edge of a backrest portion and a releasable securing mechanism for attachment to part of the structure of the motor vehicle, the securing mechanism comprises of at least one upwardly extending plate-like member for attachment to a part of a floor structure of the motor vehicle, a retainer member rotatably supported by the or each plate-like members and movable between first and second positions and a locking means to lock said retainer member in said second position, the assembly characterised in that the or each plate-like member includes an open ended slot therein into which a respective pivot means can be selectively engaged and secured by rotation of the retainer member from the first position to the second position in which it can be selectively locked by engagement of said locking means.

The locking means may include a threaded locking member which is screwed into engagement with said retainer member to hold it in said second position.

The releasable securing mechanism may comprise of two upwardly extending plate-like members each having an open ended slot therein to accommodate a respective pivot means attached near to the lower edge of a respective backrest portion.

The retainer member may be interposed between said plate-like members.

The retainer member may be rotatably connected at a mid point to the or each plate-like member and is provided with a hook shaped upper end for retaining said pivot means in the or each slot and an abutment surface near its lower end for engagement with said threaded locking member.

According to a second aspect of the invention there is provided a folding seat assembly for a motor vehicle comprising a seat section attached to part of a floor structure of the motor vehicle, at least one foldable backrest portion pivotally connected near to a lower edge thereof to part of the structure of the motor vehicle, said pivotal connection means including a pivot means attached to the lower edge of the or each backrest portion for engagement with a releasable securing mechanism secured to part of the floor structure of the vehicle, the securing mechanism comprises of at least one upwardly extending plate-like member secured to part of the floor structure of the motor vehicle, a retainer member rotatably connected to the or each plate like member for rotation from a first position to a second position, said retainer member being securable in said second position by a locking means, the assembly characterised in the or each plate-like member having an open ended slot therein into which said pivot means is engageable, and in that the pivot means can be inserted or extracted from said slot, in which the pivot means is held captive when said retainer member is in said second position.

The locking means may include a threaded locking member which is screwed into engagement with said retainer member to hold it in said second position.

There may be two backrest portions each secured at their respective inner ends by means of said releasable securing mechanism, in which case said releasable securing mechanism comprises of two upwardly extending plate like members each having an open ended slot therein to accommodate a respective pivot means attached near to the lower edge of each backrest portion.

The retainer member may be interposed between said plate like members.

The retainer member may be rotatably connected at a mid point to the or each plate-like member and is provided with a hook shaped upper end for retaining said pivot means in the or each slot and an abutment surface near its lower end for engagement with said threaded locking member.

The invention will now be described by way of example with reference to the accompanying drawing of which:-
Fig.1: is a pictorial view of part of a motor vehicle showing a folding seat assembly according to said second aspect of the invention in which a backrest portion of the seat assembly is shown disconnected from the structure of the motor vehicle;
Fig.2: is a view similar to Fig.1 showing the backrest portion in a partially installed position:
Fig.3: is a view similar to Fig.2 but showing the backrest portion in an installed position;
Fig.4: is a side view of a releasable seat mechanism according to said first aspect of the invention showing part of the securing mechanism in a first position;
Fig 5: is a side view similar to Fig.4 but showing part of the securing mechanism in a second position;
Fig.6: is an enlarged partial end view in the direction of arrow 'X' on Fig.5.

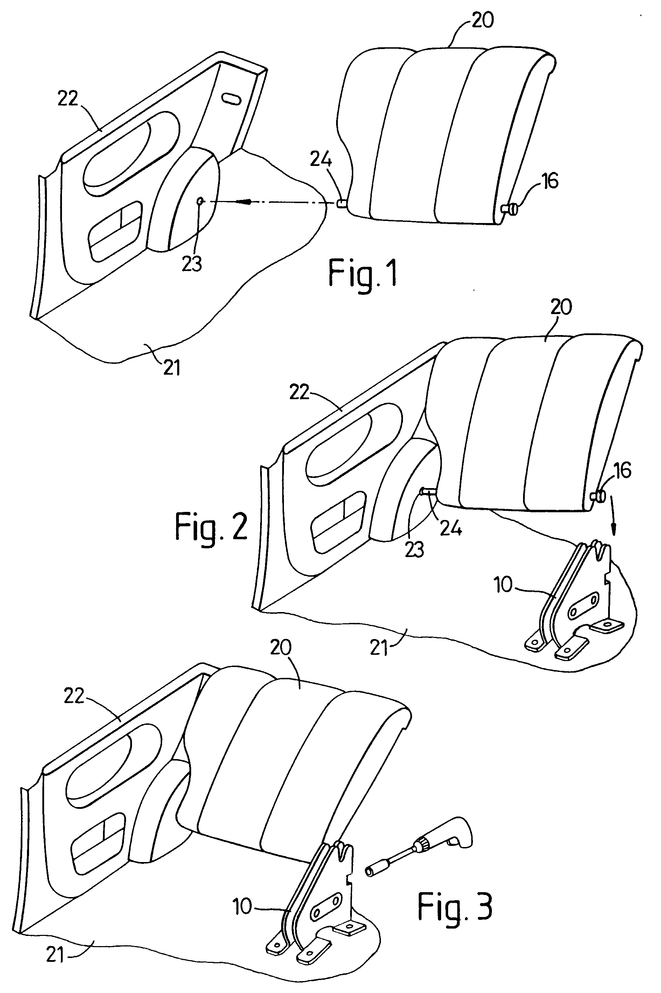

With reference to Figs 1 to 3 there is shown part of the body structure of a motor vehicle in the form of a side structure 22 and a floor structure 21.

The side structure 22 is provided with a recess 23 to accommodate an outer pivot pin 24 attached near to the lower edge of a backrest portion 20 of a rear seat assembly. An inner pivot pin 16 is also provided near to the lower edge of the backrest portion 20 for engagement with a releasable securing mechanism 10 secured to part of the floor structure 21 of the motor vehicle.

In use the lower edge of the backrest portion 20 is adjacent to the rear edge of a seat portion (not shown) of the seat assembly which in combination with the backrest portion 20 and the means used to secure same to the vehicle form said rear seat assembly.

The pivot pins 16, 24, provide in combination with the recess 23 and the releasable securing mechanism 10 a pivotal securing means between the backrest portion 20 and the structure of the motor vehicle.

The backrest portion 20 is able to pivot about a transverse axis located near to its lower edge from an upright or normal position (as shown in Figs.1 to 3) to a folded forward position (not shown) in which it rests upon the seat portion of the seat assembly.

Although only one backrest portion 20 is shown in Figs 1 to 3 there would normally be two backrest portions provided one for the left hand side and one for the right hand side. In which case both of the backrest portions are similar in construction and are connected to the structure of the motor vehicle by similar means.

To enable the backrest portions 20 to be quickly installed and easily removed the inner pivot pin 16 of each backrest portion 20 is attached to the floor structure 21 by means of said releasable securing mechanism 10.

The releasable securing mechanism 10 comprises of two upstanding plate-like members 11, a retainer member 12 and a locking means 13, 14 to lock the retainer member 12 in a pre-determined position.

Each of the plate-like members 11 is provided with an upwardly facing open slot 17 into which the pivot pin 16 of the adjacent backrest portion 20 can be engaged.

The plate-like members 11 are secured to the floor structure 21 by means of bolts (not shown) and are linked together by means of a shaft 15 on which is mounted the retainer member 12 in the form of a hooked pawl.

The hooked pawl, retainer member 12 is interposed between said plate-like members 11 to provide a means of selectively retaining the pivot pins 16 within the slots 17. The retainer member 12 is provided with a hooked shaped upper end 18 and an abutment surface 19 near its lower end and is mounted on said shaft 15 at a position between said abutment surface 19 and the hooked end 18.

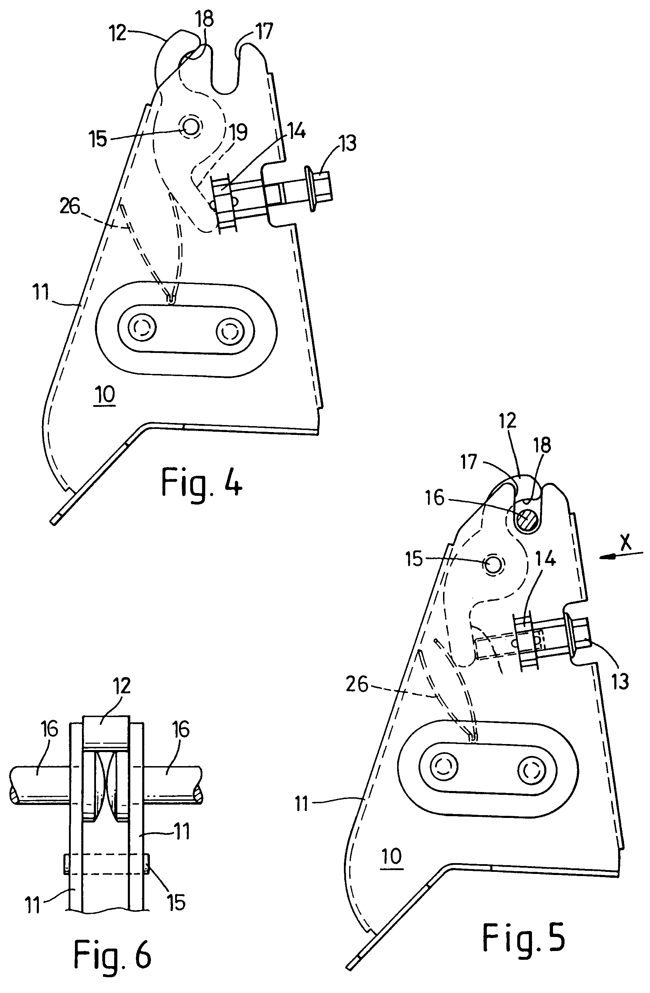

The retainer member 12 is rotatable about the axis of said shaft 15 from a first position (as shown in Fig.4) to a second position (as shown in Fig.5) to provide a means of selectively securing the inner pivot pins 16 within the slots 17 in the plate like members 11.

A spring 26 is provided to bias the retainer member 12 towards said first position. The spring is 'V'- shaped and is interposed between the retainer member 12 and an inturned flange of one of the plate-like members 11. The lower end of the spring 26 is engaged with an aperture in one of the plate-like members 11 to hold the spring 26 in position.

In said first position the openings to the slots 17 are unobstructed by the retainer member 12 thereby allowing each of the inner pivot pins 16 to be freely engaged or disengaged with its respective slot 17. When the retainer member 12 is moved into said second position access to the slots 17 is obstructed by the retainer member 12 thereby preventing the inner pivot pins 16 from being engaged with the slots 17 or disengaged from said slots 17 if already engaged.

The locking means in the form of a nut and threaded locking member 14 and 13 is provided to lock the retainer member 12 in said second position. The nut 14 is interposed between said plates 11 and held captive by engagement with respective cut outs in each of the plates 11.

To engage the locking means the threaded locking member or bolt 13 is rotated causing it to abut against the abutment surface at the lower end of the retainer member 12. The abutment of the bolt 13 with the retainer member 12 prevents rotation of said member 12 into said first position thereby locking the member 12 in a pivot pin 16 retaining position.

To insert a backrest portion 20 into the motor vehicle the outer pivot pin 24 of the backrest portion 20 is first slid longitudinally into engagement with the recess 23 in the side structure 22 of the motor vehicle.

The inner pivot pin 16 is then engaged by a downward movement into the slot 17 and then the retainer member 12 is rotated from said first position into said second position by rotation of the bolt 13 to lock the inner pivot pin 16 within said slot 17. The engagement of the bolt 13 with said member 12 thereby preventing the member 12 from moving out of said second position.

The backrest portion 20 is then securely mounted in the motor vehicle but is free to pivot about an axis extending through the inner and outer pivot pins 16, 24.

To remove the backrest portion 20 the bolt 13 is rotated thereby allowing the member 12 to be rotated by the spring 26 into said first position. The inner edge of the backrest portion 20 can then be lifted causing the inner pivot pin 16 to become disengaged from said slot 17 after which the backrest portion 20 can be moved laterally to allow disengagement of the outer pivot pin 24 from said recess 23.

## Claims

1. A motor vehicle rear seat securing means for releasably securing a rear seat backrest portion (20) to the structure of a motor vehicle, the securing means including a pivot means (16) for attachment near to the lower edge of a backrest portion and a releasable securing mechanism (10) for attachment to part of the structure of the motor vehicle, the securing mechanism (10) comprises of at least one upwardly extending plate like member (11) for attachment to a part of a floor structure (21) of the motor vehicle, a retainer member (12) rotatably supported by the or each plate-like members (11) and being movable between first and second positions and a locking means (13,14) to lock said retaining member (12) in said second position, the assembly characterised in that the or each plate-like member (11) includes an open ended slot (17) therein into which a respective pivot means (16) can be selectively engaged and secured by rotation of the retainer member (12) from the first position to the second position in which it can be selectively locked by engagement of said locking means (13,14).

2. A securing means as claimed in Claim 1 in which said locking means includes a threaded locking member (13) which is screwed into engagement with said retainer member (12) to hold it in said second position.

3. A securing means as claimed in Claim 1 or in Claim 2 in which said releasable securing mechanism comprises of two upwardly extending plate like members (11) each having an open ended slot (17) therein to accommodate a respective pivot means (16) attached near to the lower edge of a respective backrest portion (20).

4. A securing means as claimed in Claim 2 or in Claim 3 in which the retainer member (12) is rotatably connected at a mid point to the or each plate like member (11) and is provided with a hook shaped upper end (18) for retaining said pivot means (16) in the or each slot (17) and an abutment surface (19) near its lower end for engagement with said threaded locking member (13).

5. A folding seat assembly for a motor vehicle comprising a seat section attached to part of a floor structure (21) of the motor vehicle, at least one foldable backrest portion (20) pivotally connected near to a lower edge thereof to part of the structure of the motor vehicle, said pivotal connection means including a pivot means (16) attached to the lower edge of the or each backrest portion (20) for engagement with a releasable securing mechanism (10) secured to part of the floor structure (21) of the vehicle, the securing mechanism (10) comprises of at least one upwardly extending plate like member (11) secured to part of the floor structure (21) of the motor vehicle, a retainer member (12) rotatably connected to the or each plate like member (11) for rotation from a first position to a second position, said retainer member (12) being securable in said second position by a locking means (13,14) the assembly characterised in the or each plate like member (11) having an open ended slot (17) therein into which said pivot means (16) is engageable, and in that the pivot means (16) can be inserted or extracted from said slot (17), in which (17) the pivot means (16) is held captive when said retainer member (12), is in said second position.

6. An assembly as claimed in Claim 5 in which said locking means includes a threaded locking member (13) which is screwed into engagement with said retainer member (12) to hold it in said second position.

7. An assembly as claimed in any of Claims 5 or 6 in which there are two backrest portions (20) each secured at their respective inner ends by means of said releasable securing mechanism (10).

8. An assembly as claimed in Claim 7 in which said releasable securing mechanism (10) comprises of two upwardly extending plate like members (11) each having an open ended slot (17) therein to accommodate a respective pivot means (16) attached near to the lower edge of each backrest portion (20).

9. An assembly as claimed in Claim 8 in which said retainer member (12) is interposed between said plate like members (11).

10. An assembly as claimed in any of Claims 5 to 8 in which the retainer member (12) is rotatably connected at a mid-point to the or each plate like member (11) and is provided with a hook shaped upper end (18) for retaining said pivot means (16) in the or each slot (17) and an abutment surface (19) near its lower end for engagement with said threaded locking member (13).

## Patentansprüche

1. Befestigungsmittel für einen Kraftfahrzeugrücksitz zur lösbaren Befestigung eines Rücksitz-Rückenlehnenteils (20) an der Struktur eines Kraftfahrzeugs, wobei das Befestigungsmittel ein Schwenkmittel (16) zur Anbringung in der Nähe des unteren Rands eines Rückenlehnenteils und einen lösbaren Befestigungsmechanismus (10) zur Anbringung an einem Teil der Struktur des Kraftfahrzeugs enthält, wobei der Befestigungsmechanismus (10) mindestens ein sich nach oben erstreckendes plattenförmiges Glied (11) zur Anbringung an einem Teil einer Bodenstruktur (21) des Kraftfahrzeugs, ein Halteglied (12), das von dem oder jedem plattenförmigen Glied (11) drehbar gestützt wird und zwischen einer ersten und einer zweiten Position beweglich ist, und ein Verriegelungsmittel (13, 14) zur Verriegelung des Halteglieds (12) in der zweiten Position umfaßt, wobei die Anordnung dadurch gekennzeichnet ist, daß das oder jedes plattenförmige Glied (11) einen darin ausgebildeten offenen Schlitz (17) enthält, in den ein jeweiliges Schwenkmittel (16) gezielt eingreifen und darin durch Drehung des Halteglieds (12) aus der ersten Position in die zweite Position, in der es durch Eingriff des Verriegelungsmittels (13, 14) gezielt verriegelt werden kann, befestigt werden kann.

2. Befestigungsmittel nach Anspruch 1, bei dem das Verriegelungsmittel ein Gewindeverriegelungsglied (13) enthält, das in Eingriff mit dem Halteglied (12) geschraubt wird, um es in der zweiten Position festzuhalten.

3. Befestigungsmittel nach Anspruch 1 oder 2, bei dem der lösbare Befestigungsmechanismus zwei sich nach oben erstreckende plattenförmige Glieder (11) umfaßt, in denen jeweils ein offener Schlitz (17) ausgebildet ist, um ein in der Nähe des unteren Rands eines jeweiligen Rückenlehnenteils (20) befestigtes jeweiliges Schwenkmittel (16) aufzunehmen.

4. Befestigungsmittel nach Anspruch 2 oder 3, bei dem das Halteglied (12) an einem mittleren Punkt mit dem oder jedem plattenförmigen Glied (11) drehbar verbunden ist und mit einem hakenförmigen oberen Ende (18) zum Halten des Schwenkmittels (16) in dem oder jedem Schlitz (17) und einer Stoßfläche (19) in der Nähe seines unteren Endes zum Eingriff mit dem Gewindeverriegelungsglied (13) versehen ist.

5. Klappbare Sitzanordnung für ein Kraftfahrzeug mit einem an einem Teil einer Bodenstruktur (21) des Kraftfahrzeugs angebrachten Sitzabschnitt, mindestens einem klappbaren Rückenlehnenteil (20), der in der Nähe eines unteren Rands davon mit einem Teil der Kraftfahrzeugstruktur schwenkbar verbunden ist, wobei das Schwenkverbindungsmittel ein an dem unteren Rand des oder jedes Rückenlehnenteils (20) angebrachtes Schwenkmittel (16) zum Eingriff mit einem lösbaren Befestigungsmechanismus (10) enthält, der an einem Teil der Bodenstruktur (21) des Fahrzeugs befestigt ist, wobei der Befestigungsmechanismus (10) mindestens ein sich nach oben erstreckendes plattenförmiges Glied (11), das an einem Teil der Bodenstruktur (21) des Kraftfahrzeugs angebracht ist, und ein Halteglied (12), das mit dem oder jedem plattenförmigen Glied (11) zur Drehung aus einer ersten Position in eine zweite Position drehbar verbunden ist, umfaßt, wobei das Halteglied (12) durch ein Verriegelungsmittel (13, 14) in der zweiten Position befestigt werden kann, wobei die Anordnung dadurch gekennzeichnet ist, daß in dem oder jedem plattenförmigen Glied (11) ein offener Schlitz (17) ausgebildet ist, in den das Schwenkmittel (16) eingreifen kann, und daß das Schwenkmittel (16) in den Schlitz (17) eingeführt oder daraus herausgezogen werden kann, in dem das Schwenkmittel (16) festgehalten wird, wenn sich das Halteglied (12) in der zweiten Position befindet.

6. Anordnung nach Anspruch 5, bei der das Verriegelungsmittel ein Gewindeverriegelungsglied (13) enthält, das in Eingriff mit dem Halteglied (12) geschraubt ist, um es in der zweiten Position zu halten.

7. Anordnung nach Anspruch 5 oder 6, bei der zwei Rückenlehnenteile (23) vorhanden sind, die jeweils an ihrem jeweiligen inneren Ende mittels des lösbaren Befestigungsmechanismus (10) befestigt sind.

8. Anordnung nach Anspruch 7, bei der der lösbare Befestigungsmechanismus (10) zwei sich nach oben erstreckende plattenförmige Glieder (11) umfaßt, in denen jeweils ein offener Schlitz (17) ausgebildet ist, um ein in der Nähe des unteren Rands jedes Rückenlehnenteils (20) befestigtes jeweiliges Schwenkmittel (16) aufzunehmen.

9. Anordnung nach Anspruch 8, bei der das Halteglied (12) zwischen den plattenförmigen Gliedern (11) angeordnet ist.

10. Anordnung nach einem der Ansprüche 5 bis 8, bei der das Halteglied (12) an einem mittleren Punkt mit dem oder jedem plattenförmigen Glied (11) drehbar verbunden ist und mit einem hakenförmigen oberen Ende (18) zum Halten des Schwenkmittels (16) in dem oder jedem Schlitz (17) und einer Stoßfläche (19) in der Nähe seines unteren Endes zum Eingriff mit dem Gewindeverriegelungsglied (13) versehen ist.

## Revendications

1. Moyen de fixation d'un siège arrière de véhicule à moteur pour fixer, de manière détachable, une portion de dossier (20) de siège arrière à la structure d'un véhicule à moteur, le moyen de fixation comportant un moyen de pivot (16) destiné à être attaché près du bord inférieur d'une portion de dossier et un mécanisme de fixation détachable (10) destiné à être attaché à une partie de la structure du véhicule à moteur, le mécanisme de fixation (10) se composant d'au moins un organe de type plaque (11) s'étendant vers le haut destiné à s'attacher à une partie d'une structure de plancher (21) du véhicule à moteur, d'un organe de retenue (12) supporté à rotation par le ou chaque organe de type plaque (11) et déplaçable entre des première et deuxième positions et d'un moyen de verrouillage (13, 14) pour verrouiller ledit organe de retenue (12) dans ladite deuxième position, l'ensemble étant caractérisé en ce que le ou chaque organe de type plaque (11) comporte une fente à extrémité ouverte (17), dans laquelle un moyen de pivot respectif (16) peut être engagé et fixé de manière sélective par rotation de l'organe de retenue (12) de la première position dans la deuxième position dans laquelle il peut être verrouillé de manière sélective par engagement dudit moyen de verrouillage (13, 14).

2. Moyen de fixation selon la revendication 1, dans lequel ledit moyen de verrouillage comporte un organe de verrouillage fileté (13) qui est vissé en engagement avec ledit organe de retenue (12) pour le retenir dans ladite deuxième position.

3. Moyen de fixation selon la revendication 1 ou la revendication 2, dans lequel ledit mécanisme de fixation détachable se compose de deux organes de type plaque (11) s'étendant vers le haut, ayant chacun une fente à extrémité ouverte (17) pour recevoir un moyen de pivot respectif (16) attaché près du bord inférieur d'une portion de dossier respective (20).

4. Moyen de fixation selon la revendication 2 ou la revendication 3, dans lequel l'organe de retenue (12) est connecté à rotation en un point central à l'organe ou à chaque organe de type plaque (11) et est pourvu d'une extrémité supérieure en forme de crochet (18) pour retenir ledit moyen de pivot (16) dans la ou chaque fente (17) et d'une surface de butée (19) près de son extrémité inférieure pour l'engagement avec ledit organe de verrouillage fileté (13).

5. Ensemble de siège pliable pour un véhicule à moteur, comprenant une section de siège attachée à une partie d'une structure de plancher (21) du véhicule à moteur, au moins une portion de dossier pliable (20) connectée à pivotement près d'un bord inférieur de celle-ci à une partie de la structure du véhicule à moteur, ledit moyen de connexion pivotable comportant un moyen de pivot (16) attaché au bord inférieur de la ou de chaque portion de dossier (20) pour l'engagement avec un mécanisme de fixation détachable (10) fixé à une partie de la structure de plancher (21) du véhicule, le mécanisme de fixation (10) se composant d'au moins un organe de type plaque s'étendant vers le haut (11) fixé à une partie de la structure de plancher (21) du véhicule à moteur, d'un organe de retenue (12) connecté à rotation à l'organe ou à chaque organe de type plaque (11) pour effectuer une rotation depuis une première position dans une deuxième position, ledit organe de retenue (12) pouvant être fixé dans ladite deuxième position par un moyen de verrouillage (13, 14), l'ensemble étant caractérisé en ce que le ou chaque organe de type plaque (11) a une fente à extrémité ouverte (17), dans laquelle ledit moyen de pivot (16) est engageable, et en ce que le moyen de pivot (16) peut être inséré dans ladite fente (17) ou extrait de celle-ci, dans laquelle fente (17) le moyen de pivot (16) est retenu prisonnier lorsque ledit organe de retenue (12) est dans ladite deuxième position.

6. Ensemble selon la revendication 5, dans lequel ledit moyen de verrouillage comporte un organe de verrouillage fileté (13) qui est vissé en engagement avec ledit organe de retenue (12) pour le retenir dans ladite deuxième position.

7. Ensemble selon l'une quelconque des revendications 5 ou 6, dans lequel il y a deux portions de dossier (20), chacune étant fixée à son extrémité interne respective au moyen dudit mécanisme de fixation détachable (10).

8. Ensemble selon la revendication 7, dans lequel ledit mécanisme de fixation détachable (10) se compose de deux organes de type plaque (11) s'étendant vers le haut, ayant chacun une fente à extrémité ouverte (17) pour recevoir un moyen de pivot respectif (16) attaché près du bord inférieur de chaque portion de dossier (20).

9. Ensemble selon la revendication 8, dans lequel ledit organe de retenue (12) est interposé entre lesdits organes de type plaque (11).

10. Ensemble selon l'une quelconque des revendications 5 à 8, dans lequel l'organe de retenue (12) est connecté à rotation en un point central à l'organe ou à chaque organe de type plaque (11) et est pourvu d'une extrémité supérieure (18) en forme de crochet pour retenir ledit moyen de pivot (16) dans la ou chaque fente (17) et d'une surface de butée (19) près de son extrémité inférieure pour l'engagement avec ledit organe de verrouillage fileté (13).
